# EUROPÄISCHE PATENTANMELDUNG

(11) **EP 1 854 668 A1**
(43) Veröffentlichungstag der Anmeldung: **14.11.2007**
(21) Anmeldenummer: 07008723.4
(22) Anmeldetag: 28.04.2007
(51) Int. Cl.: B60Q 3/02, F21V 23/04

(54) **Kartenleuchte zur Montage in einem militärischen Fahrzeug, insbesondere einem Kampfpanzer**

(30) Priorität: 13.05.2006 DE 202006007670 U
(71) Anmelder: Krauss-Maffei Wegmann GmbH & Co. KG, 80997 München (DE)
(72) Erfinder: Zenker, Klaus, 34260 Kaufungen (DE); Föhst, Stefan, 34376 Immenhausen (DE)
(74) Vertreter: Feder, Wolf-Dietrich

(57) **Zusammenfassung**

Eine Kartenleuchte zur Montage in einem militärischen Fahrzeug, insbesondere einem Kampfpanzer. Die Leuchte besitzt einen Leuchtenkopf (1), der über einen eine elektrische Zuleitung enthaltenden Schwanenhals (2) mit einem Gehäuse (3) verbunden ist, an dem ein Schalter (3.1) und eine Halterung (3.2) angeordnet sind und in das ein Ende eines Anschlusskabels (4) hineingeführt ist. Am anderen Ende des Anschlusskabels (4) ist ein Kabelstecker (5) angeordnet. In dem reflektorlosen Leuchtenkopf (1) ist eine mit einer oder zwei Leistungs-Leuchtdioden bestückte Leiterplatte senkrecht zur Abstrahlrichtung angeordnet, die an die elektrische Zuleitung angeschlossen ist.

## Beschreibung

Die Erfindung betrifft eine Kartenleuchte zur Montage in einem militärischen Fahrzeug, insbesondere einem Kampfpanzer, mit einem Leuchtenkopf, der über einen eine elektrische Zuleitung enthaltenden Schwanenhals mit einem Gehäuse verbunden ist, an dem ein Schalter und eine Halterung angeordnet sind und in das ein Ende eines Anschlußkabels hineingeführt ist, an dessen anderem Ende ein Kabelstecker angeordnet ist.

Derartige Leuchten sind an sich bekannt.

In einem Kampfpanzer sind die räumlichen Verhältnisse außerordentlich begrenzt, so dass alle zusätzlichen Geräte, die von der Besatzung des Kampfpanzers benötigt werden, möglichst wenig Raum einnehmen sollen und bei ihrer Betätigung möglichst wenig störenden Einfluß auf die Umgebung ausüben sollen.

Der Erfindung lag die Aufgabe zugrunde, eine Kartenleuchte mit den eingangs und im Obergriff des Patentanspruchs 1 angegebenen Merkmalen so auszubilden, dass sie zum Studium von Karten oder Tabellen einen begrenzten, aber ausreichend beleuchteten Lichtfleck erzeugt, wobei möglichst wenig Streulicht zur Seite hin austreten sollte. Weiterhin sollte die Leuchte möglichst wartungsfrei sein und an das elektrische Netz des Fahrzeugs mit einer Spannung von 24 Volt anschließbar sein und es sollte die Möglichkeit eröffnet werden, mehrere Helligkeitsstufen oder unterschiedliche Farben einzustellen.

Die Lösung dieser Aufgabe erfolgt erfindungsgemäß mit den Merkmalen aus dem kennzeichnendem Teil des Patentanspruchs 1. Vorteilhafte Weiterbildungen der Erfindung sind in den abhängigen Ansprüchen beschrieben.

Ein Grundgedanke der Erfindung besteht darin, als Lichtquelle für die Leuchte eine einzige oder höchstens zwei, innerhalb des Leuchtenkopfes angeordnete, Leistungs-Leuchtdioden einzusetzen und den Leuchtenkopf ohne den bei anderen Leuchten üblichen Reflektor hinter der Lichtquelle auszubilden.

Zur Einstellung unterschiedlicher Helligkeitsstufen der Leuchtdiode können im Gehäuse Widerstände oder Widerstandskombinationen angeordnet sein, die in den elektrischen Stromkreis einschaltbar sind. Die Leuchte kann unmittelbar an das elektrische Netz des Fahrzeugs angeschlossen werden.

Zur Einstellung unterschiedlicher Farben werden zwei innerhalb des Leuchtenkopfes angeordnete Leistungs-Leuchtdioden eingesetzt, welche Licht unterschiedlicher Farben, beispielsweise rotes Licht und grünes Licht, abgeben können. Diese beiden Leistungs-Leuchtdioden sind mittels des am Gehäuse angeordneten Schalters anwählbar.

Die Leuchtdioden erzeugen infolge ihrer Abstrahlcharakteristik ein eng begrenztes Lichtbündel, ohne dass nennenswert Streulicht nach der Seite abgestrahlt wird.

Die erfindungsgemäße Kartenleuchte ist nahezu wartungsfrei und kann mittels einer einfachen Halterung innerhalb eines militärischen Fahrzeugs, insbesondere eines Kampfpanzers, montiert werden.

Im folgenden wird anhand der beigefügten Zeichnung ein Ausführungsbeispiel für eine Kartenleuchte nach der Erfindung näher erläutert.

In der Zeichnung zeigen:
- Fig. 1: eine Kartenleuchte in einer perspektivischen Darstellung;
- Fig. 2: die Kartenleuchte nach Fig. 1 in einer Seitenansicht;
- Fig. 3: den Leuchtenkopf der Kartenleuchte nach Figuren 1 und 2 im Längsschnitt.

Die in den Figuren dargestellte Kartenleuchte besitzt einen Leuchtenkopf 1, der über ein eine elektrische Zuleitung 10 enthaltendes flexibles Zwischenstück, einen sogenannten Schwanenhals 2, mit einem Gehäuse 3 verbunden ist, an dem ein Schalter 3.1 und eine Halterung 3.2 angeordnet sind. In das Gehäuse 3 ist ein Ende eines Anschlußkabels 4 hineingeführt, an dessen anderem Ende ein Kabelstecker 5 angeordnet ist. Mittels der einfach aufgebauten, im wesentlichen U-förmigen, Halterung 3.2 kann die Kartenleuchte im Innenraum eines nicht dargestellten militärischen Fahrzeugs, insbesondere eines Kampfpanzers, montiert werden.

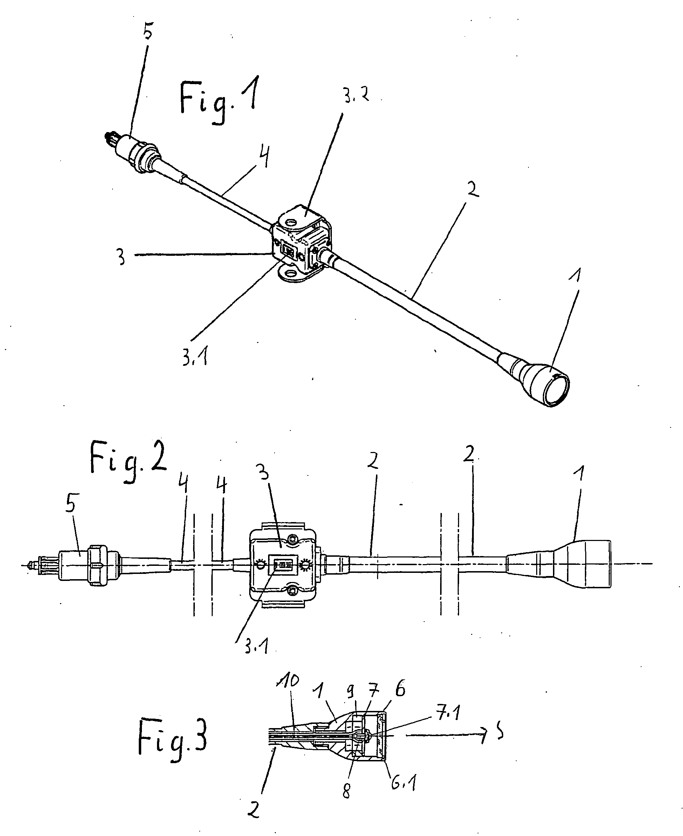

Der in Fig. 3 dargestellte Leuchtenkopf besitzt keinen Reflektor, sondern in ihm ist lediglich eine Leiterplatte 7 angeordnet, die an ihrer nach außen weisenden Seite mit einer einzigen Leistungs-Leuchtdiode 7.1 bestückt ist. Die Leiterplatte 7 ist senkrecht zur Abstrahlrichtung S angeordnet und an die elektrische Zuleitung 10 angeschlossen.

An der Vorderseite ist der Leuchtenkopf 1 mit einem Austrittsfenster 6 aus Glas oder Kunststoff verschlossen, das mittels eines Sprengrings 6.1 festgehalten ist. Die Leiterplatte 7 ist auf einem Abstandsring 9 angeordnet, der sich an der Rückseite des Leuchtenkopfes 1 abstützt. Die Leiterplatte 7 ist mit dem Abstandsring 9 über Schraubverbindungen 8 verbunden.

Durch den Abstandsring 9 ist die elektrische Zuleitung 10 in den Schwanenhals 2 hineingeführt.

Zur Einstellung unterschiedlicher Helligkeitsstufen der Leuchtdiode 7.1 können im Gehäuse 3 in nicht eigens dargestellter Weise in den elektrischen Stromkreis einschaltbare Widerstände angeordnet sein. In diesem Falle kann der Schalter 3.1 als Mehrstellungsschalter ausgebildet sein.

## Patentansprüche

1. Kartenleuchte zur Montage in einem militärischen Fahrzeug, insbesondere einem Kampfpanzer, mit einem Leuchtenkopf (1), der über einen eine elektrische Zuleitung (10) enthaltenden Schwanenhals (2) mit einem Gehäuse (3) verbunden ist, an dem ein Schalter (3.1) und eine Halterung (3.2) angeordnet sind und in das ein Ende eines Anschlußkabels (4) hineingeführt ist, an dessen anderem Ende ein Kabelstecker (5) angeordnet ist, **dadurch gekennzeichnet, dass** in dem reflektorlosen Leuchtenkopf (1) eine mit einer oder zwei Leistungs-Leuchtdioden (7.1) bestückte Leiterplatte (7) senkrecht zur Abstrahlrichtung (S) angeordnet ist, die an die elektrische Zuleitung (10) angeschlossen ist.

2. Kartenleuchte nach Anspruch 1, **dadurch gekennzeichnet ist, dass** bei einer mit ausschließlich einer Leistungs-Leuchtdiode (7.1) bestückten Leiterplatte (7) die Leistungs-Leuchtdiode zur Abgabe von weißem Licht unterschiedlicher Helligkeitsstufen ausgebildet ist, die durch den Schalter (3.1) anwählbar sind.

3. Kartenleuchte nach Anspruch 2, **dadurch gekennzeichnet, dass** zur Einstellung der unterschiedlichen Helligkeitsstufen der Leuchtdiode (7) im Gehäuse (3) in den elektrischen Stromkreis einschaltbare Widerstände angeordnet sind.

4. Kartenleuchte nach Anspruch 1, **dadurch gekennzeichnet, dass** bei einer mit zwei Leistungs-Leuchtdioden bestückten Leiterplatte die Leistungs-Leuchtdioden zur Abgabe von Licht mit zwei unterschiedlichen Farben ausgebildet sind, die durch den Schalter anwählbar sind.

5. Kartenleuchte nach einem der Ansprüche 1 bis 4, **dadurch gekennzeichnet, dass** die Leiterplatte (7) auf einem sich an der Rückwand des Leuchtenkopfes (1) abstützenden Abstandsring (9) angeordnet ist, durch welchen die elektrische Zuleitung (10) geführt ist.
